# EUROPEAN PATENT APPLICATION

(11) **EP 1 662 776 A1**
(43) Date of publication of application: **31.05.2006**
(21) Application number: 04772822.5
(22) Date of filing: 30.08.2004
(51) Int. Cl.: H04N 5/225, H04M 11/00, H04N 101/00

(54) **CAMERA HAVING TRANSMISSION FUNCTION, MOBILE TELEPHONE DEVICE, AND IMAGE DATA ACQUIRING/TRANSMITTING PROGRAM**

(30) Priority: 01.09.2003 JP 2003308567
(71) Applicant: MATSUSHITA ELECTRIC INDUSTRIAL CO., LTD., Kadoma-shi, Osaka 571-8501 (JP)
(72) Inventor: IWASAKI, Mariko, Tokyo 180-0003 (JP); IKEDA, Takumi, Hyogo 651-0053 (JP)
(74) Representative: Grünecker, Kinkeldey, Stockmair & Schwanhäusser Anwaltssozietät
(86) International application number: PCT/JP2004/012873
(87) International publication number: WO 2005/022902

(57) **Abstract**

A camera acquires destination information, then accepts an instruction for capturing an image, and sends the captured image data to a destination indicated in the destination information. Accordingly, this camera can protect the user from missing the next shutter opportunity while transmitting the image, or from neglecting to transmit the captured image data due to the bothersome nature of the task.

## Description

### TECHNICAL FIELD

The present invention relates to a digital camera with a function of transmitting data of captured images, a mobile telephone device to which aforementioned type of camera is built in, and an image data acquiring/transmitting program for operating the camera.

### BACKGROUND ART

A conventional digital camera system is disclosed in the Japanese Patent Unexamined Publication No. 2003-69988. This digital camera system includes a communication I/F (interface) driver supporting a communication card and TCP/IP (Transmission Control Protocol/Internet Protocol) which is a standard communication protocol. A personal computer employs an http, a browser function, and a digital camera employs an httpd, a server function, to enable the storage of HTML (Hyper Text Markup Language) files. In accordance with an URL (Uniform Resource Locator) from the personal computer, the digital camera forwards HTML files to the personal computer. When a shutter button displayed on the personal computer screen is pressed, the digital camera in response activates a program for the shutter.

This digital camera also sends data of captured image to a predetermined destination, then deletes the image data in the camera after transmission. This secures a free space in the memory of the camera. Accordingly, this digital camera can capture high-quality image data which requires a large free space in the memory. This system is not configured to send captured image data after accepting an entry of destination information. Accordingly, the user may miss the next shutter opportunity, or may neglect to transmit the captured image data due to the bothersome nature of the task.

There is a camera-equipped mobile telephone which transmits captured image data to a destination indicated by an e-mail address when the user enters the e-mail address after capturing an image. For sending the captured image data using this mobile telephone, an operation to transmit needs to be implemented after capturing the image. Accordingly, the user may miss the next shutter opportunity while transmitting the image, or may neglect to transmit the captured image data due to the bothersome nature of the task.

### SUMMARY OF THE INVENTION

A camera of the present invention acquires destination information, then accepts an instruction for capturing an image, executes image capture, and sends the captured image data to a destination indicated in the destination information. More specifically, image capture acts as a trigger for sending the captured image data to the destination indicated in the entered destination information. Accordingly, this camera can protects the user from missing the next shutter opportunity while transmitting the image, or from neglecting to transmit image data due to the bothersome nature of the task.

### BRIEF DESCRIPTION OF THE DRAWINGS

Fig. 1 is a hardware block diagram illustrating an example of a rough configuration of a camera in exemplary embodiments of the present invention.
Fig. 2 is a functional block diagram of a camera in accordance with a first exemplary embodiment of the present invention.
Fig. 3 is a flow chart illustrating the operation of the camera in accordance with the first exemplary embodiment of the present invention.
Figs. 4A and 4B are an appearance of a camera-equipped mobile phone in accordance with the first exemplary embodiment of the present invention.
Fig. 4C is a block diagram of the camera-equipped mobile phone in Figs. 4A and 4B.
Fig. 5 shows a destination information entry screen in accordance with the first exemplary embodiment of the present invention.
Fig. 6 is a functional block diagram of a camera in accordance with a second exemplary embodiment of the present invention.
Fig. 7 is a flow chart illustrating the operation of the camera in accordance with the second exemplary embodiment of the present invention.
Fig. 8 shows transmission condition control table in accordance with the second exemplary embodiment of the present invention.
Fig. 9 is a functional block diagram of a camera in accordance with a third exemplary embodiment of the present invention.
Fig. 10 is a flow chart illustrating the operation of the camera in accordance with the third exemplary embodiment of the present invention.
Fig. 11 is an operation information control table in accordance with the third exemplary embodiment of the present invention.
Fig. 12 is another operation information control table in accordance with the third exemplary embodiment of the present invention.
Fig. 13 is a functional block diagram of a camera in a fourth exemplary embodiment of the present invention.
Fig. 14 is a flow chart illustrating the operation of the camera in accordance with the fourth exemplary embodiment of the present invention.
Fig. 15 is a condition control table in accordance with the fourth exemplary embodiment of the present invention.

### DETAILED DESCRIPTION OF THE PREFERRED EMBODIMENTS

Exemplary embodiments of the present invention are described below with reference to drawings. Components with the same function are given the same reference numeral in the exemplary embodiments and duplicate description may be omitted..

### FIRST EXEMPLARY EMBODIMENT

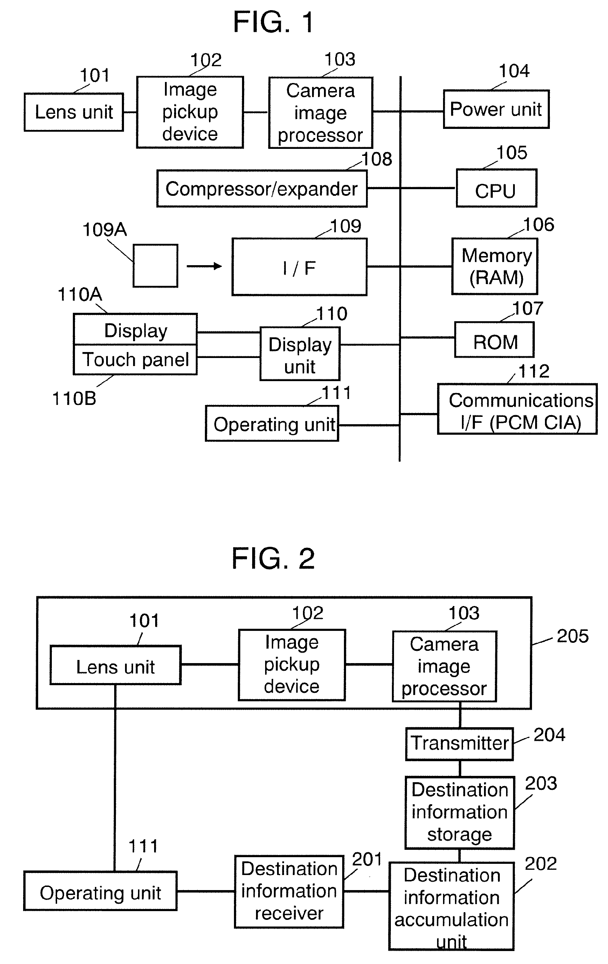

Fig. 1 is a hardware block diagram roughly illustrating the configuration example of a camera in the first exemplary embodiment of the present invention. Lens unit 101, configuring an imaging mechanism, includes a lens, filter, and a mechanism section with auto-focus (AF) and aperture. A mechanical shutter in the mechanism section exposes two fields simultaneously. Image pickup device 102 is a CCD image sensor or MOS pickup device that converts an image input via lens unit 101 to electrical signals (analog signals) so as to create image data.

Camera image processor (hereinafter reffered as "processor") 103 includes a CDS (correlated double sampling) circuit for reducing noise generated by image pickup device 102. Processor 103 also includes an A/D converter for converting analog signals input from image pickup device 102 via this CDS circuit to digital signals. Processor 103 digitizes analog signals to integral multiples of optimal sampling frequency, such as sub-carrier frequency in NTSC (National Television Standards Committee) signals. After that, white balance, color signal processing, and so on are applied.

Power unit 104 supplies power to each part of the camera. Central processor (CPU) 105 controls the entire apparatus. Memory (RAM) 106 temporarily stores programs to be processed by CPU 105, configuration data for apparatuses, and image data; and is also used as a working area. ROM 107 stores a boot program that activates on turning on the apparatus.

Compressor/expander 108 divides image data sent from processor 103 into color-difference data and luminance data, and applies a range of processing, compensation, and data processing for compressing and expanding the image data. For example, compressor/expander 108 applies orthogonal transform/reverse-orthogonal transform which are part of the compression and expansion of image data conforming to JPEG (Joint Photographic Experts Group) and Huffman coding/decoding. Through these processes, JPEG image data, text-mode image data, binary image data, motion pictures such as AVI, and so on are compressed and expanded.

Compressed image data is stored in RAM 106 in the form of a file, or stored in recording medium 109A inserted in I/F 109. Recording medium 109A is a flash memory, such as an SD memory card, Smartmedia and Compact Flash; a magnetic medium or an optical recording medium such as a floppy disk, CDR, DVD-R, and DVD-RAM.

Display unit 110 is coupled to display 110A configured with a liquid crystal panel. Display unit 110 displays modes, error messages, or monitored screen data during capture, and captured image data or thumbnails during playback on display 110A. Display unit 110 also controls the transmission of coordinate signals from touch panel 110B to CPU 105.

When the power for capture mode is turned on, display unit 110 outputs the image data processed by processor 103 directly to display 110A as motion-image data. In other words, display 110A acts as a viewfinder. Alternatively, a viewfinder (not illustrated) can be provided separately. A user looks at display 110A and waits for an opportunity to press a shutter button (capture button).

Operating unit 111 includes some kinds of buttons for selecting functions, instructing capture, and making other settings from outside. For example, operating unit 111 includes a shutter button, zoom key, mode dial, flash button, and macro button which are used during capture; menu keys, cursor keys for moving to the left, right, top, and bottom, an ENTER key, CANCEL key, and SELECT key for displaying guidance on display 110A to select functions; power button for turning on and off the power supply; and buttons for recording and playback the operations.

Each button may also have a diferent function in each operation mode such as capture, playback, and communications. Touch panel 110B can also be used for assigning multiple functions to the keys. A signal generated by pressing a button to issue a required operation is transmitted from operating unit 111 to CPU 105, and the camera operates in accordance with a predetermined program. Moreover, touch panel 110B can be used for entering characters like a keyboard of a personal computer.

Communications I/F 112 is an interface with external communications equipment. For example, communications I/F 112 adopts PCMCIA (Personal Computer Memory Card International Association), a standard for PC cards, which have become commonly employed due to increased use of notebook personal computers. Communications I/F 112 include, as PC cards, a modem card for coupling to a PSTN (public switched telephone network), a TA (terminal adapter) card for coupling to ISDN (Integrated Services Digital Networks), a LAN card for coupling to LANs (Local Area Networks), and a wireless communications card for coupling to mobile phones. The camera is coupled to external communications equipment using these cards.

The camera further includes a flash unit (not illustrated) with a function such as a capacitor required for emitting light by controlling the flash during capture in night or so.

Fig. 2 is a functional block diagram of the camera in the first exemplary embodiment. Fig. 2 chiefly illustrates the components characteristic of this exemplary embodiment. The camera includes image data acquisition unit 205 with lens unit 101, image pickup device 102, and processor 103; operating unit 111; destination information receiver 201; accumulation unit 202: destination information storage 203; and transmitter 204. Image data acquisition unit 205 captures an image and acquires data of the image.

Destination information receiver (hereinafter reffered as "receiver") 201 accepts destination information which the user has entered using operating unit 111. The destination information can be any information that specifies a destination, such as an e-mail address and IP address. Receiver 201 is realized, for example, by a device driver of operating unit 111 such as a numeric keypad and a keyboard, or control software of the menu screen.

Destination information accumulation unit (hereinafter reffered as "accumulation unit") 202 accumulates destination information accepted by receiver 201 in destination information storage (hereinafter reffered as "storage") 203. In general, accumulation unit 202 is realized by CPU 105, RAM 106 and so on. The procedures of accumulation unit 202 for accumulating destination information are generally realized by software. The software is recorded on a recording medium such as a ROM. However, hardware (dedicated circuitry) may also be used for this purpose.

Storage 203 is a memory for storing destination information in advance. A non-volatile recording medium is preferable for storage 203, but a volatile recording medium is also applicable, as exemplified by RAM 106.

Transmitter 204 automatically transmits image data after capturing the image by pressing the capture button, which is a part of operating unit 111, to the destination information stored in storage 203. In this case, the camera accepts an instruction to capture the image after accepting entry of the destination information. The image is then captured, and the image data is sent to the destination. However, transmitter 204 does not always transmit the image data immediately after capturing an image. Transmitter 204 may send the image data after a predetermined time (e.g., a few seconds) has elapsed after image capture. Alternatively, transmitter 204 may send the image data after inquiring the user whether or not to send the image data, and sends it only after an instruction for transmission is received. A wireless communications mechanism is preferable for transmitter 204, but a wired communications mechanism is also applicable. Transmitter 204 may either include communications I/F 112 or exclude it (it may consist of a software part).

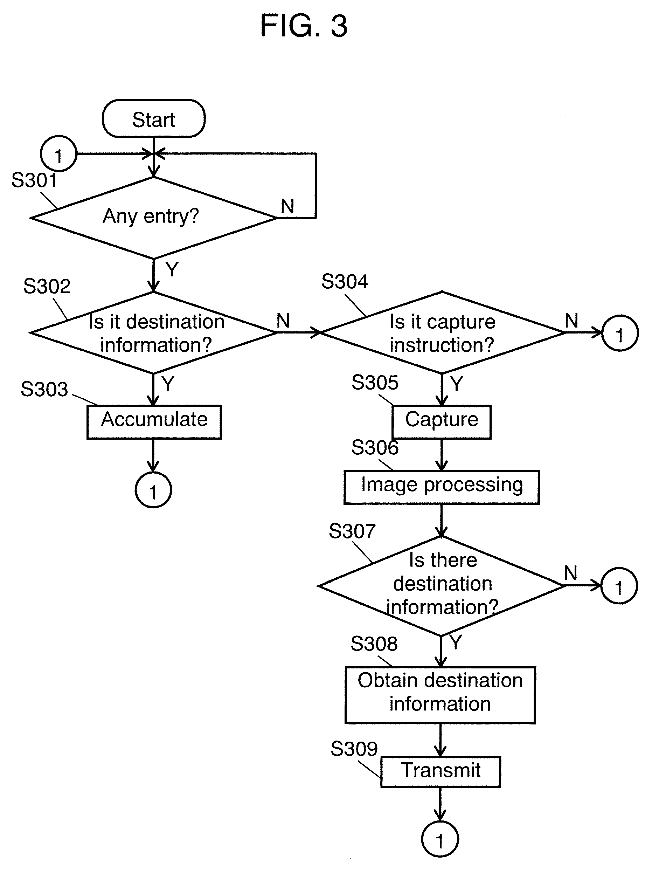

The operation of the camera is described next with reference to the flow chart in Fig. 3.
(S301) It is determined whether or not an entry from operating unit 111 exists. If there is an entry, the procedure advances to S302. If there is no entry, the procedure returns to S301.
(S302) It is determined whether or not the entry in S301 is related to destination information. If destination information is entered, the procedure advances to S303. If the entry is not destination information, the procedure jumps to S304.
(S303) Accumulation unit 202 accumulates the entered destination information in storage 203, and the procedure returns to S301.
(S304) It is determined whether or not an entry in S301 is a capture instruction. If the entry is a capture instruction, the procedure advances to S305. If the entry is not a capture instruction, the procedure returns to S301.
(S305) Lens unit 101 captures an image, and image pickup device 102 converts the image input via lens unit 101 into electrical signals (analog signals) to obtain image data.
(S306) Processor 103 applies a predetermined process to the image data obtained in S305. Here, the image data is stored, typically, in RAM 106.
(S307) Transmitter 204 determines whether or not destination information is stored in storage 203. If the destination information is stored, the procedure advances to S308. If the destination information is not stored, the procedure returns to S301.
(S308) Transmitter 204 obtains the destination information in storage 203.
(S309) Transmitter 204 sends the captured image data to a destination indicated in the destination information obtained in S308. The procedure then returns to S301.

The procedure ends when the power is turned off or a termination interrupt (mode switchover, etc.) is entered.

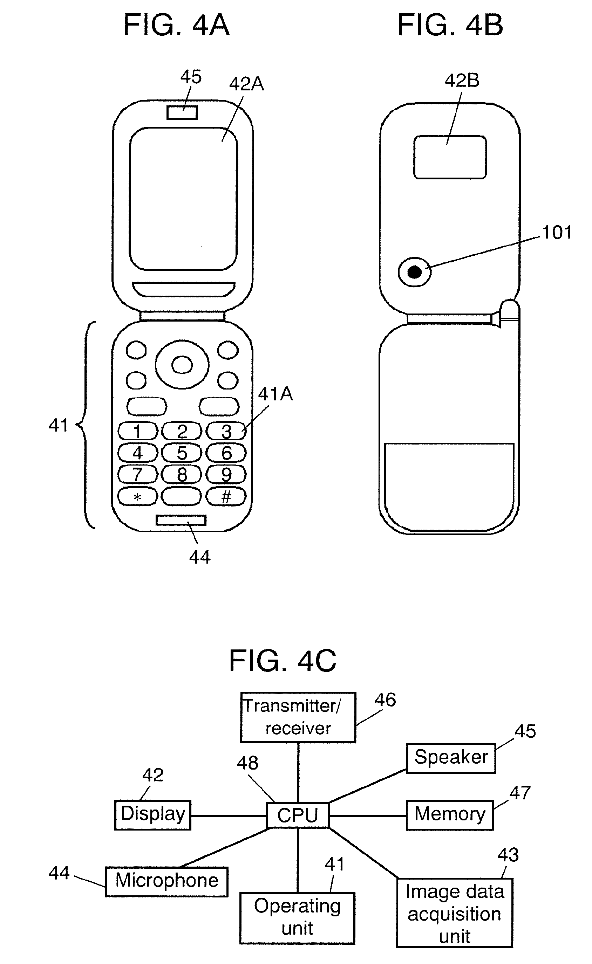

Specific operations of the camera in the first exemplary embodiment are described next. Figs. 4A, 4B, and 4C show a camera-equipped mobile phone. More specifically, the camera in this exemplary embodiment is built into a mobile phone. Fig. 4A shows a face with buttons 41A which form operating unit 41 of the mobile phone and display 42A configured with a liquid crystal panel. Fig. 4B shows a face with lens unit 101 of the mobile phone and display 42B configured with a small liquid crystal panel. Fig. 4C is a functional block diagram. Transmitter/receiver 46 sends audio input from microphone 44 via CPU 48 by radio. Speaker 45 generates the ring tone and also voice data signals sent from a caller (outside) in voice form upon receiving signals when transmitter/receiver 46 receives the signals. Transmitter/receiver 46 corresponds to transmitter 204 in Fig. 2, and CPU 48 corresponds to CPU 105 in Fig. 1. Display unit 42 includes display 42A and display 42B in Figs. 4A and 4B, and it corresponds to display unit 110 and display 110A in Fig. 1. Operating unit 41 corresponds to operating unit 111 in Fig. 1, and image data acquisition unit 43 corresponds to image data acquisition unit 205 in Fig. 2. Memory 47 corresponds to RAM 106 in Fig. 1, and accumulation unit 202 and storage 203 in Fig. 2.

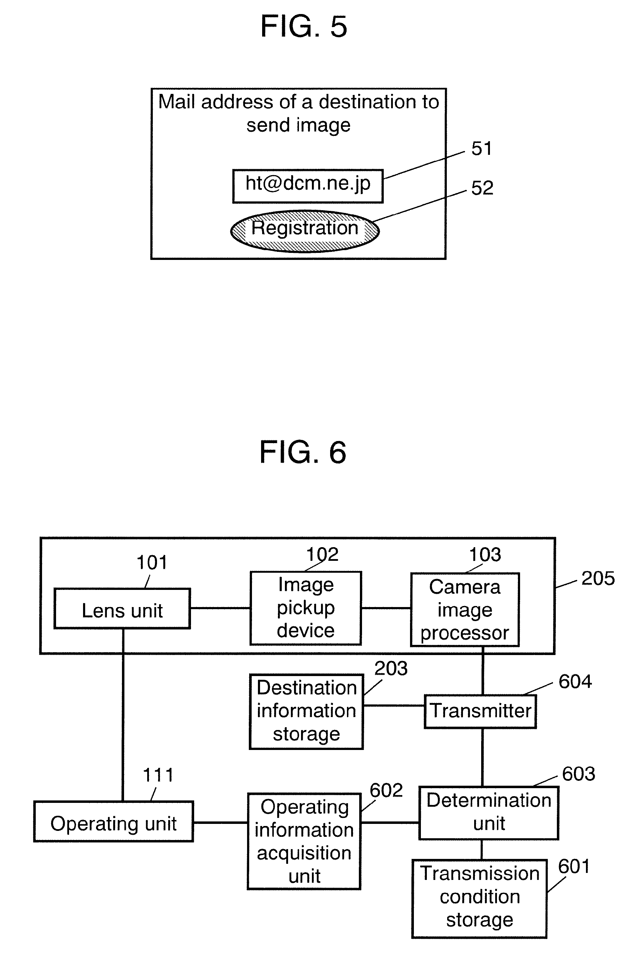

First, the user of this mobile phone enters the destination information indicating the destination to send an image to be captured in field 51 shown in the destination entry screen shown in Fig. 5 before capturing the image. Then, the entered destination information, ht@dcm.ne.jp, is stored in memory 47 (storage 203) when registration button 52 is selected.

Next, the user switches the mode of the mobile phone to the camera mode, and presses the capture button. The mobile phone (camera) captures the image and stores it. The mobile phone then sends the captured image data to the destination indicated in the destination information, i.e., ht@dcm.ne.jp. The capturing procedures which take place when the mode of the mobile phone is switched to the camera mode and the capture button is pressed are covered by conventional technology, and thus their detailed description is omitted here.

As described above, the camera in this exemplary embodiment automatically sends the captured image data to the destination indicated in the destination information after the entry of the destination information is accepted. Accordingly, the user does not miss the next shutter opportunity while transmitting the image, or neglect to transmit the captured image data due to the bothersome nature of the task.

In the present exemplary embodiment, transmitter/receiver 46 (transmitter 204) is preferably designed to immediately send image data to the destination indicated in the destination information after capturing the image. Transmitter/receiver 46 may send the image data to the destination indicated in the destination information several seconds after image capture. Alternatively, transmitter/receiver 46 may be designed to send the image data to the destination indicated in the destination information after inquiring the user whether or not to send the image data, and receiving an instruction to send the image data.

In the present exemplary embodiment, it may be designed to delete the image data that has been temporarily stored after sending the image data. This allows more efficient use of the recording medium of the mobile phone or the camera.

The destination information is manually entered in this exemplary embodiment. However, the destination information may also be entered by the user with selecting it typically from an address book in which destination information is previously registered.

The present exemplary embodiment provides an example in the case where a camera is built into a mobile phone. However, it is apparent that any other form is applicable as long as the camera is equipped with a transmission function. In other words, the telephony function is not essential. This similarly applies to other exemplary embodiments.

Still more, processing for sending the image data from the camera in this exemplary embodiment may also be realized by means of software. This software may be distributed such as via software downloads. The software may also be distributed by recording it in a recording medium such as a CD-ROM. The same applies to other exemplary embodiments. The software which realizes transmission processing of the image data from the camera in this exemplary embodiment is the program described as following. Briefly speaking, this program executes step A to capture an image and obtain the image data; step B to obtain the destination information stored previously in storage 203 for specifying the destination; and step C to send the image data to the destination obtained in step B. More specifically, the program executes a destination information acceptance step of accepting an entry of destination information; a step of accumulating the destination information received in the destination information acceptance step; a step of accepting an instruction to capture the image; a step of capturing the image and obtaining its image data; and a transmission step of sending the image data to the destination indicated in the destination information after capturing the image.

### SECOND EXEMPLARY EMBODIMENT

Fig. 6 is a functional block diagram of a camera in the second exemplary embodiment of the present invention. The hardware configuration of the camera is the same as that shown in Fig. 1. Fig. 6 chiefly illustrates the components characteristic of this exemplary embodiment. The camera includes image data acquisition unit 205 having lens unit 101, image pickup device 102, and camera image processor 103; operating unit 111, storage 203, transmission condition storage 601, operating information acquisition unit 602, determination unit 603, and transmitter 604.

Transmission condition storage (hereinafter reffered as "storage") 601 stores a transmission condition in a way such that the transmission condition is related to destination information. The transmission condition is a condition for sending image data and also a condition on a capture operation. The capture operation refers to a operation involving pressing the capture button. Storage 601 is preferably a nonvolatile recording medium, but volatile recording media are also applicable.

Operating information acquisition unit (hereinafter reffered as "acquisition unit") 602 acquires operating information which is information on the operation for capturing images. The operating information is, for example, information on pressing of the capture button in operating unit 111. More specifically, the operating information includes the duration of time the capture button is pressed, or the number of presses of the capture button per unit time. The data structure of operating information is not limited. Acquisition unit 602 is generally realized, for example, by CPU105 and RAM 106. Procedures of acquisition unit 602 for acquiring operating information are normally realized by software, and this software is recorded in a recording medium such as a ROM 107. However, hardware (dedicated circuitry) may also be used for this purpose.

Determination unit 603 determines whether or not the operating information that acquisition unit 602 has acquired matches the transmission condition in storage 601. The content and structure of the transmission condition are not limited. Example of transmission condition are described later. Determination unit 603 is generally realized, for example, by CPU105 and RAM 106. Procedures of determination unit 603 are normally realized by software, and this software is recorded in a recording medium such as ROM 107. However, hardware (dedicated circuits) may also be used for this purpose.

Transmitter 604 sends the captured image data to the destination indicated in the destination information in storage 203 when determination unit 603 determines that the operating information matches the transmission condition. A wireless communications mechanism is preferable for transmitter 604, but a wired communications mechanism is also applicable. Transmitter 604 may either include communications I/F 112 or exclude it (it may consist of a software part).

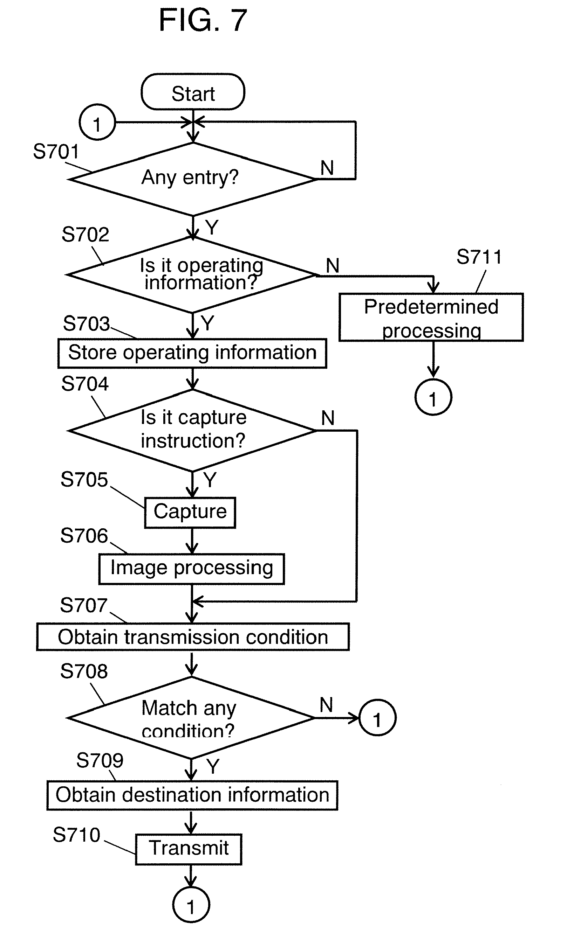

Next, the operation of the camera is described with reference to the flow chart in Fig. 7.
(S701) It is determined whether or not an entry from operating unit 111 exists. When there is an entry, the procedure advances to S702, and if there is no entry, the procedure returns to S701.
(S702) Acquisition unit 602 determines whether or not the entry in S701 is related to a capture operation. If the entry is related to the capture operation, the procedure advances to S703. If the entry is not related to the capture operation, the procedure jumps to S711.
(S703) Acquisition unit 602 acquires the operating information and temporarily stores it. The operating information can also be added, and thus a history of operations may also be stored.
(S704) It is determined whether or not the entry in S701 is a capture instruction. If the entry is the capture instruction, the procedure advances to S705. If the entry is not the capture instruction, the procedure jumps to S707.
(S705) Lens unit 101 captures an image, and image pickup device 102 converts the image input via lens unit 101 to electrical signals (analog signals) to obtain image data.
(S706) Processor 103 applies a predetermined process to the image data obtained in S705. Here, in general, the image data is stored in RAM106.
(S707) Determination unit 603 acquires a transmission condition stored in storage 601.
(S708) Determination unit 603 determines whether or not the operating information temporarily stored matches the transmission condition acquired in S707. If the information matches the transmission condition, the procedure advances to S709. If the information does not match the transmission condition, the procedure returns to S701.
(S709) Transmitter 604 obtains a destination information stored in storage 203.
(S710) Transmitter 604 sends the captured image data to a destination indicated in the destination information obtained in S709, and the procedure returns to S701.
(S711) A predetermined process corresponding to the entry takes place, and the procedure returns to S701.

The procedure ends when the power is turned off or a termination interrupt is entered.

Specific operations of the camera in the second exemplary embodiment are described next. An appearance of the camera is the same as that in Figs. 4A and 4B. A functional block diagram is the same as that in Fig. 4C. This camera is built into a mobile phone. Transmitter/receiver 46 in Fig. 4C corresponds to transmitter 604 in Fig. 6. CPU 48 and memory 47 correspond to acquisition unit 602 and determination unit 603, and memory 47 corresponds to storages 203 and 601.

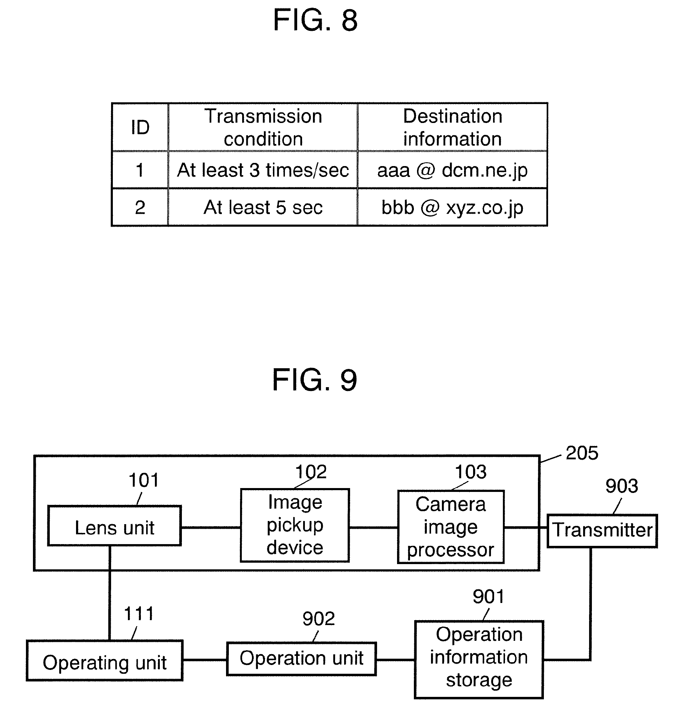

This camera-equipped mobile phone holds a transmission condition control table shown in Fig. 8 in storages 203 and 601. The transmission condition control table manages at least one record containing "ID," "Transmission condition," and "Destination information." In other words, the transmission condition and destination information are relatively stored. "ID" is information for identifying each record, and it is included due to the need in controlling the table. "Transmission condition" is information indicating a condition for sending captured image data. The transmission condition of "at least 3 times/sed' in Fig. 8 refers to pressing the capture button at least three times in one second (accepting the capture instruction). In other words, this transmission condition is satisfied when the capture button is pressed three times or more in one second (the capture instruction is accepted). The transmission condition of "at least 5 sec" means that this transmission condition is satisfied when the capture button is kept pressed for at least 5 seconds. The destination information is information indicating a destination to send the captured image data when the related transmission condition is satisfied. In Fig. 8, "Destination information" is a mail address. However, it does not necessarily be a mail address. The "Destination information" may also be an IP address, and so on.

Assume that the user has kept pressing the capture button on the camera-equipped mobile phone for 5 seconds or longer under these conditions. The mobile phone detects that the capture button is being pressed, and capture takes place. The mobile phone then accumulates the captured image data in a recording medium. Next, the mobile phone detects that the capture button has been kept pressed for 5 seconds or longer, and determines that the state matches the transmission condition of "ID = 2" in the transmission condition control table. Next, the mobile phone acquires the destination information of "bbb@xyz.co.jp" related to "ID = 2." The mobile phone then sends the captured image data to "bbb@xyz.co.jp."

If the user presses the capture button 5 times in 1 second, the mobile phone captures the image 5 times, acquires 5 pieces of image data, and accumulates them. The mobile phone then determines that the state matches the transmission condition of "ID = 1" in the transmission condition control table. Next, the mobile phone acquires the destination information of "aaa@dcm.ne.jp" related to "ID = 1". The mobile phone then sends the captured image data to "aaa@dcm.ne.jp". In this case, all five pieces of image data may be sent, or only the image data that matches a predetermined condition may be sent. For example, one predetermined condition could be "send only the last image (the fifth image in this case)" or "send only the first image." Still more, a predetermined condition can be "send only the best one." In this case, image data processing technology is used as a method of choosing the "best" captured image. For example, if a captured target is a person as a precondition, the image featuring the greatest likeness of a person can be used as the criterion of the best image. The extent to which a person dominates the image can be determined based on a contour extraction technology in the public domain.

As described above, the camera (mobile phone) in this exemplary embodiment controls conditions related to the capture operation. When the capture operation matches these conditions, captured image data is automatically sent to the destination related to the capture operation. This configuration allows automatic transmission of captured image data to a predetermined destination when a specific capture operation is executed.

In the above example, captured image data is sent to him/herself (e.g., aaa@dcm.ne.jp) when the image is continuously captured, for example. When the capture button is kept pressed for a predetermined time or more, the captured image data is sent to his/her friend's mobile phone (e.g., "bbb@xyz.co.jp"). In other words, captured image data can be automatically sent to a destination corresponding to the capture operation when the capture operation matches one of the conditions for capture operation.

Transmission conditions are not limited to the above conditions in this exemplary embodiment. A condition related to the number of capture operations, a condition related to the number of captures per unit time, or a condition related to the pressing time of the capture button may be included in the transmission conditions. In the above example, the transmission condition control table includes two transmission conditions, however, three or more transmission conditions can be included in the transmission condition control table. In addition, conditions can be set such that the operating information matches multiple transmission conditions. For example, the first transmission condition is "when the capture button is pressed for 3 seconds or more" and the second condition is "when the capture button is pressed for 5 seconds or more.

In the presentexemplary embodiment, transmission conditions and destination information in the camera can be preferably customized.

Software realizing the camera in this exemplary embodiment is a program described as below. This program executes step A to capture an image and obtain the image data; step B to obtain destination information stored previously in storage 203 for specifying a destination; and step C to send the image data to the destination obtained in step B. More specifically, this program executes an operating information acquisition step of acquiring operating information related to an image capture operation; a step of capturing an image and obtaining its image data; a step of determining whether or not the operating information matches a stored transmission condition; and a step of sending the captured image data to a destination indicated in the destination information related to the transmission condition when the operating information is determined to match in the step of determination.

### THIRD EXEMPLARY EMBODIMENT

Fig. 9 is a block diagram of a camera in the third exemplary embodiment of the present invention. The hardware configuration of this camera is the same as that in Fig. 1. Fig. 9 chiefly indicates components characteristic of the present invention. The camera includes image data acquisition unit 205 having lens unit 101, image pickup device 102, and camera image processor 103; operating unit 111, operation information storage 901, operation unit 902, and transmitter 903.

Operating unit 111 has two or more capture buttons for capturing an image. When one of the buttons is pressed, the camera captures an image, and an operation related to the capture button pressed is executed.

Operation information storage (storage) 901 stores two ore more pieces of operation information, respectively for each of the capture buttons, on an operation which is executed when one of the capture buttons is pressed The operation information includes, for example, a command for sending information and destination information. Another example of the operation information is a command for storing information and accumulation destination (e.g. folder name). A data structure of the operation information is not limited. A nonvolatile recording medium is preferable for storage 901, but a volatile recording medium is also applicable.

Operation unit 902 acquires the operation information related to the capture button pressed from storage 901 when pressing of the capture button is accepted, and operates in accordance with the operation information obtained. Operation unit 902 is normally realized by CPU 105, RAM 106, and so on. Procedures of operation unit 902 are normally realized by software, and this software is record in a recording medium such as ROM 107. However, hardware (dedicated circuitry) may also be used for this purpose.

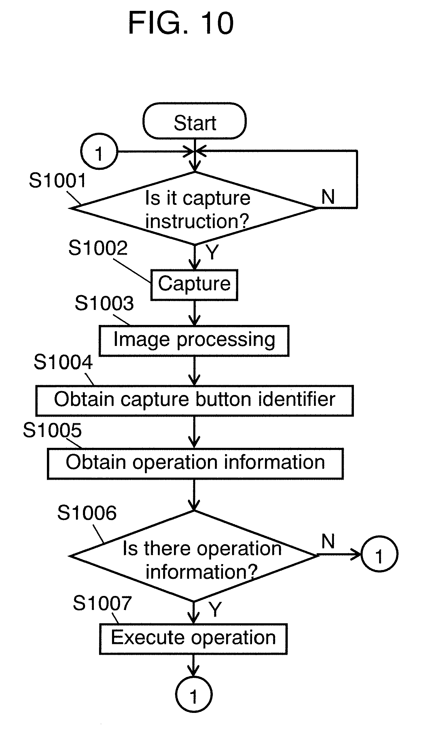

The operation of the camera in this exemplary embodiment is described with reference to a flow chart in Fig. 10
(S1001) It is determined whether or not a capture button in operating unit 111 is pressed (whether or not a capture instruction is accepted). If a capture button is pressed, the procedure advances to S1002. If a capture button is not pressed, the procedure returns to S1001.
(S1002) Lens unit 101 captures an image, and image pickup device 102 converts the image input via lens unit 101 into electrical signals (analog signals) to obtain image data.
(S1003) Processor 103 applies a predetermined process to the image data obtained in S1002. Here, the image data is temporarily stored.
(S1004) Operation unit 902 obtains a capture button identifier for identifying the capture button pressed.
(S1005) Operation unit 902 obtains operation information related to the capture button identifier obtained in S1004 from storage 901.
(S1006) Operation unit 902 determines whether or not the operation information obtained in S1005 exists (NULL or not). If the operation information exists, the procedure advances to S1007. If the operation information does not exist, the procedure returns to S1001.
(S1007) Operation unit 902 executes the operation corresponding to the operation information obtained in S1005.

The procedure ends when the power is turned off or a termination interrupt (mode switchover, etc.) is entered.

Specific operations of the camera in the present exemplary embodiment are described next. An appearance of the camera is the same as that shown in Figs. 4A and 4B. A functional block diagram is the same as Fig. 4C. This camera is built into a mobile phone. Transmitter/receiver 46 in Fig. 4C corresponds to transmitter 903 in Fig. 9. CPU 48 and memory 47 correspond to operation unit 902, and memory 47 corresponds to storage 901

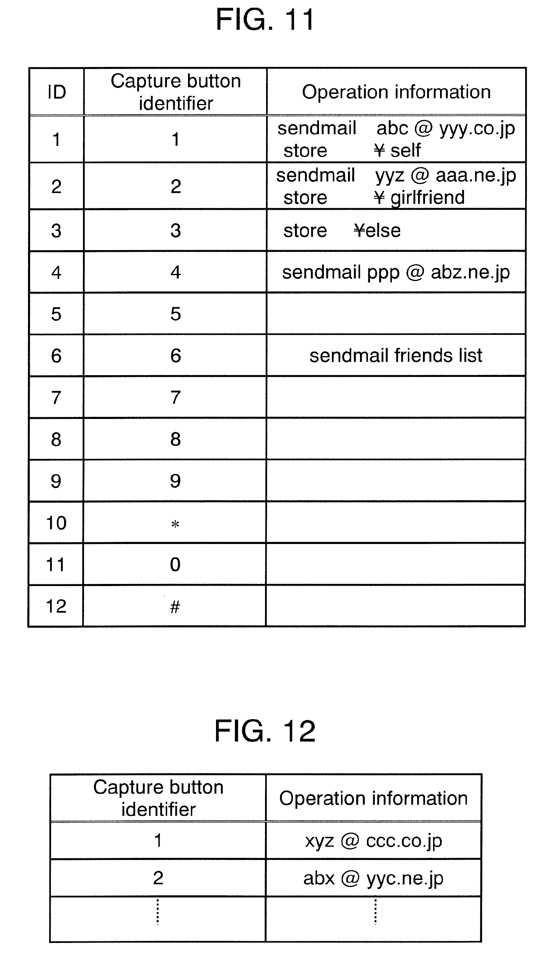

The camera-equipped mobile phone holds an operation information control table shown in Fig. 11 in storage 901. The operation information control table manages at least one record containing "ID," "Capture button identifier," and "Operation information." In this operation information control table, the operation information is stored in a way such that the data is related to capture button identifiers 1, 2, 3, 4, and 6. More specifically, in the buttons 41A shown in Fig. 4A, an operation in accordance with respective operation information is executed when one of buttons "1", "2", "3", "4", and "6" is pressed for capturing an image. If one of buttons 41A other than buttons "1", "2", "3", "4", and "6" is pressed, only an image is captured, and the image data is temporarily stored in memory 47.

The operation information contains information on one or more operations, and thus information on two or more operations may be indicated. The operation information of "sendmail XXX" stands for sending captured image data to "XXX." The operation information of "store YYY" stands for storing captured image data in folder "YYY." The operation information of "sendmail abc@yyy.co.jp" in record "ID =1" in the operation information control table shown in Fig. 11 stands for sending captured image data to "abc@yyy.co.jp". The operation information of "store¥self' in the same record "ID = 1" stands for storing captured image data in folder "¥self." For example, "abc@yyy.co. jp" is a mail address of a girlfriend of the user (male).

The user switches the camera-equipped mobile phone to the camera mode. The user then captures an image of a girlfriend, for example, by pressing button "2". In this case, the mobile phone obtains the operation information of "sendmail yyz@aaa.ne.jp," and "store ¥girlfriend" in record "ID = 2" in the operation information control table. The mobile phone then executes the operation information obtained. Specifically, the mobile phone sends the captured image data (image data of the girlfriend) to "yyz@aaa.ne.jp" (user's e-mail address) in accordance with "sendmail yyz@aaa.ne.jp." The mobile phone also stores the captured image data in folder "¥girlfriend" in accordance with "store ¥girlfriend." When the user presses button "5", only capture takes place. When the user presses button "3", the image data is stored in folder "¥other." In this way, the operation information may designate only a storage destination without information on transmission.

Other than the above information, the following contents may be set as the operation information.
1) When multiple recording media 109A exist in Fig. 1, image data is stored in accordance with a medium identifier which identifies the type of media 109A. For example, if an SD memory card is designated as the medium identifier, the SD memory card is searched, and the image data is recorded on this medium. If there is only one recording medium 109A, and the SD memory card is designated in a medium identifier, but no SD memory card is linked to interface 109, an alarm sound is generated without storing image data.
2) When other display devices such as a liquid crystal panel, EL panel, or three-dimensional display panel are coupled via communications I/F 112 in Fig. 1, an image is displayed on the display device designated using a display medium identifier for identifying the type of display device. Still more, if one of these other display devices is designated, comparison with display 110A in Fig. 1 can be made to determine whether to display the image may be implemented.
3) When the image is displayed on display 110A or other display devices as mentioned above, the display size and resolution are designated.
4) An image is displayed in accordance with the size and type of the image data to be displayed. For example, if the image data is 8-bit grayscale, a procedure for determining whether or not to display takes place before operation. Alternatively, the direction (vertically-long or horizontally-long) in which the image is to be displayed is determined before display.
5) If a second image data acquisition unit exists in Fig. 2, the second image data acquisition unit automatically acquires an image. In other words, the second image data acquisition unit captures an image of the user in conjunction with the operation of first image data acquisition unit 205 to acquire an image.
6) A camera in another equipment coupled via communications I/F 112 is used for capture. For example, a camera-equipped mobile phone belonging to a different person nearby captures an image in conjunction with operation of image data acquisition unit 205 to acquire the image. Alternatively, a camera at home captures an image.
7) Other equipment coupled via communications I/F 112 is controlled. For example, a control command for lighting equipment is sent to turn the lighting equipment on or off. Alternatively, a command to start up an authentication function of an authentication server is sent.

As described above, the camera in this exemplary embodiment has multiple capture buttons, and operation information for each capture button is controlled. An operation other than capture is also executed depending on the capture button pressed. If different operations are needed for captured image data, specific operations are automatically executed simply by changing a button to be pressed, offering a very useful configuration.

The operation information control table is not limited to that shown in Fig. 11. For example, the operation information control table can be that shown in Fig. 12. In this case, an auxiliary operation (operation other than capture) that the camera executes is fixed to the transmission of captured image data, and an e-mail address is designated in the operation information. The camera sends the captured image data to a destination corresponding to the capture button pressed. In other words, the camera has the function of capturing an image, has one or more capture buttons, and stores destination information corresponding to each capture button. When the pressing of one capture button is accepted, the camera captures the image and then sends the image data to the destination indicated in the destination information related to that button. The camera can also be equipped with one capture button. In this case, the operation information is equivalent to the destination information.

In this exemplary embodiment, the user can customize the operation information and the capture button identifiers.

In addition, as described above, numeric buttons (numeric keypad) for entering a telephone number are preferably used as capture buttons when the camera-equipped mobile phone is switched to the camera mode. In other words, the mobile phone with a built-in camera has a mode switchover button for switching to the camera mode, and the numeric keypad of the mobile phone functions as the capture buttons when the mode switchover button is pressed.

Software for realizing the camera in this exemplary embodiment is the program described as below. Briefly speaking, this program executes step B to obtain the destination information stored previously in storage 901 for specifying the destination; and step C to send image data to the destination obtained in step B. More specifically, the program executes a step of accepting pressing of one of multiple capture buttons; a step of capturing an image and obtaining its image data; a step of obtaining operation information including destination information corresponding to the capture button pressed and accepted; and a step of executing an operation in accordance with the operation information obtained and sending the image data.

The operation information does not necessarily include the information on transmission of the image data. In this sense, transmitter 204 may not always be needed.

### FOURTH EXEMPLARY EMBODIMENT

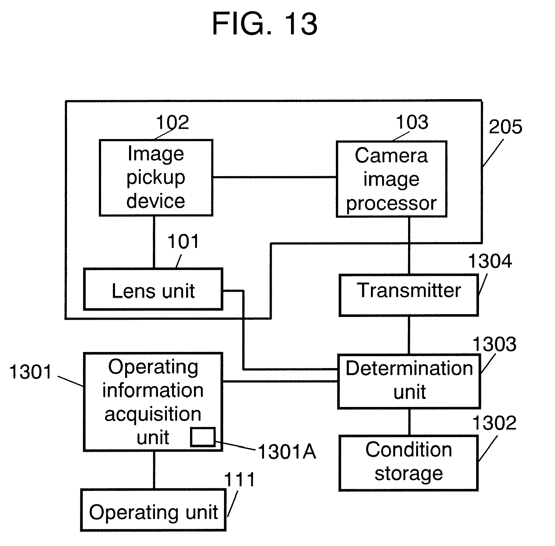

Fig. 13 is a block diagram of a camera in the fourth exemplary embodiment of the present invention. The hardware configuration of the camera is the same as that in Fig. 1. Fig. 13 chiefly shows components characteristic of this exemplary embodiment. The camera includes image data acquisition unit 205 having lens unit 101, image pickup device 102, and camera image processor 103; operating unit 111, operating information acquisition unit 1301, condition storage 1302, determination unit 1303, and transmitter 1304.

Operating information acquisition unit (hereinafter reffered as "acquisition unit") 1301 acquires operating information on camera operations. Here, the operating information is not limited to information on image capture. Examples of the operating information are described later. Acquisition unit 1301 is generally realized by CPU 104, RAM 106, and so on. Procedures of acquisition unit 1301 for obtaining the operating information is normally realized by software, and this software is recorded on a recording medium such as ROM 107. However, hardware (dedicated circuit) may also be used for this purpose. Acquisition unit 1301 has operating information buffer (hereinafter reffered as "buffer") 1301A.

Condition storage (hereinafter reffered as "storage") 1302 stores conditions on image capture and transmission of the captured image data. Example of the conditions are described later. Storage 1302 is preferably non-volatile recording medium, but volatile recording medium is also applicable.

Determination unit 1303 determines whether or not the operating information obtained by acquisition unit 1301 satisfies a condition in storage 1302. If the condition is satisfied, determination unit 1303 instructs image capture to lens unit 101, and also instructs transmitter 1304 to send the captured image data. Destination information of image data and the above condition are relatively stored in storage 1302.

Determination unit 1303 is generally realized, for example, by CPU 105 and RAM 106. Determination procedures of determination unit 1303 are generally realized by software, and this software is recorded on a recording medium such as ROM 107. However, hardware (dedicated circuitry) may also be used for this purpose.

Transmitter 1304 sends the captured image data to a destination related to the condition. A wireless communications mechanism is preferable for transmitter 1304, but a wired communications mechanism is also applicable. Transmitter 1304 may either include communications I/F 112 or exclude it (it may consist of a software part).

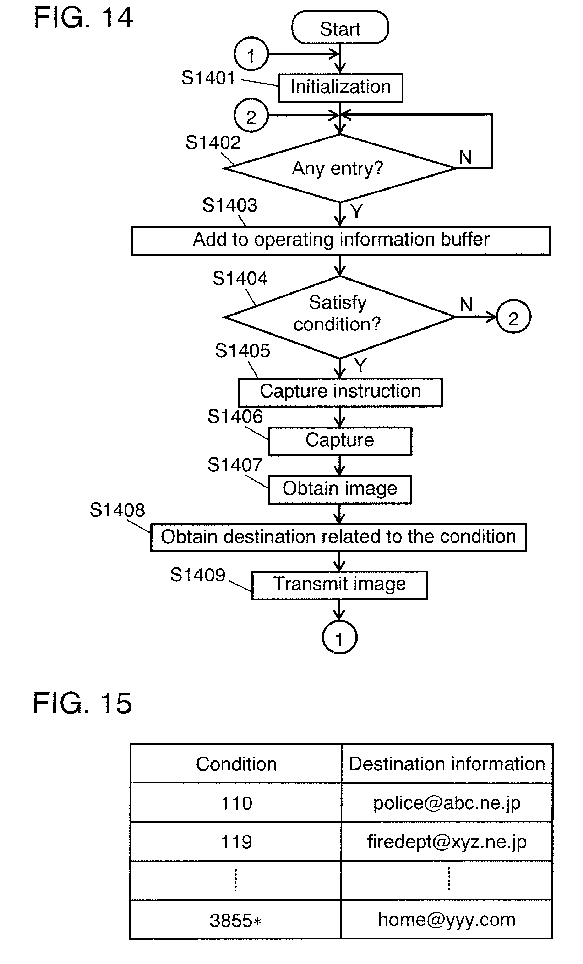

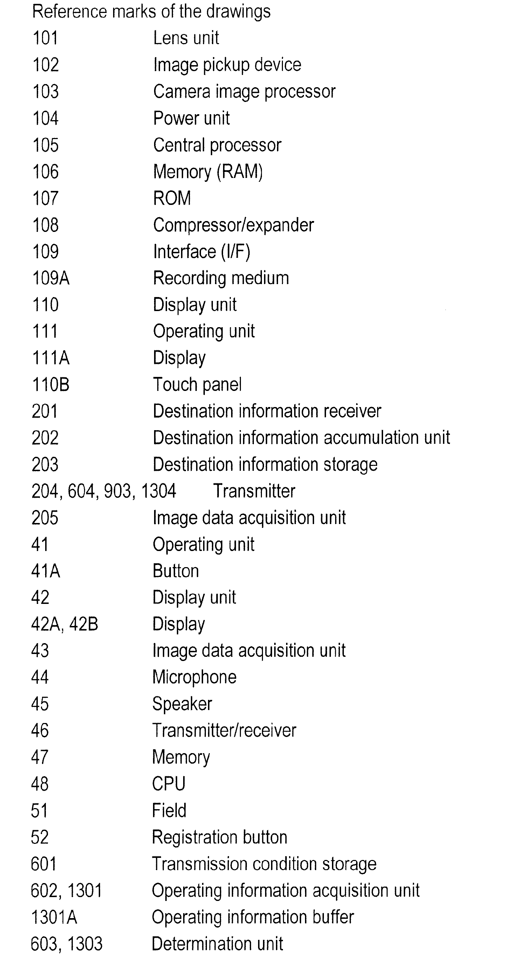

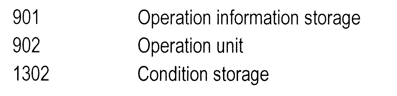

The operation of the camera is described next with reference to the flow chart in Fig. 14.
(S1401) Buffer 1301A which is a buffer for storing operating information is emptied (initialized).
(S1402) Acquisition unit 1301 determines whether or not an entry from operating unit 111 exists. If there is an entry, the procedure advances to S1403. If there is no entry, the procedure returns to S1402.
(S1403) Acquisition unit 1301 adds the entry to buffer 1301A.
(S1404) Determination unit 1303 determines whether or not the operating information in buffer 1301A satisfies a condition in storage 1302. If two or more conditions are stored in storage 1302, for example, determination unit 1301 determines whether or not one of these conditions is satisfied. If the condition is satisfied, the procedure advances to S1405. If the condition is not satisfied, the procedure returns to S1402.
(S1405) Determination unit 1303 instructs image capture.
(S1406) Lens unit 101 captures an image, and image pickup device 102 converts the image input via lens unit 101 to electrical signals (analog signals) to obtain image data.
(S1407) Processor 103 applies a predetermined process to the image data obtained in S1406. Here, for example, processor 103 stores (writes) the captured image data in a predetermined storage area
(S1408) Determination unit 1303 obtains a destination related to the matched condition from storage 1302, and transmitter 1304 instructs transmission of the image data.
(S1409) Transmitter 1304 sends image data to the destination obtained in S1408. Then, the procedures returns to S1401.

The procedure ends when the power is turned off or a termination interrupt (mode switchover, etc.) is entered.

Specific operations of the camera in the present exemplary embodiment are described next. An appearance of the camera is the same as that in Figs. 4A and 4B. A functional block diagram is the same as Fig. 4C. This camera is built in a mobile phone. Transmitter/receiver 46 in Fig. 4C corresponds to transmitter 1304 in Fig. 13. CPU 48 and memory 47 correspond to acquisition unit 1301 and determination unit 1303, and memory 47 corresponds to storage 1302.

The camera-equipped mobile phone stores a condition control table shown in Fig. 15 in storage 1302. The condition control table has at least one record containing "Condition" and "destination information." "Condition" refers to a condition for capturing an image and sending it. "Destination information" refers to a mail address for sending the captured image data. However, "Destination information" is not limited to a mail address. It can be any information indicating a destination to send information, such as an IP address. Fig. 15 illustrates that when the user enters "110" by operating buttons 41A in Fig. 4A, the mobile pone (camera) captures an image and sends that image data to police@abc.ne.jp which is a mail address of an apparatus at a police station. If the user enters "119," the mobile phone captures an image immediately after entering the last number "9," and sends the image data to firedept@abc.ne.jp which is a mail address of an apparatus at a fire department. In these cases, the sequence of pressing operation buttons 41A is the operating information.

In the present exemplary embodiment, the user can capture images and send image data to the appropriate destination as though he/she is making a phone call. For example, if the user is attacked by someone, or feels endangered, he/she can capture an image of the criminal and automatically send the image data to a police station simply by directing the lens at the criminal and entering "110." Accordingly, this mobile phone leads to better security, and contributes to the arrest of suspected criminals.

In this exemplary embodiment, conditions (condition control table) can be preferably customized.

As described above, when the mobile phone is set to the camera mode, an image is taken and data of the image is sent to an appropriate destination (e.g., a police station) just by entering a telephone number (e.g., "110"). On the other hand, it is preferable that the user can make a call by entering a telephone number (e.g., "110") in the telephony mode. The camera mode, for example, is a mode in which menu items for the camera are selectable and images can be taken. The telephony mode is a mode in which phone calls can be made. A switching function between the camera mode and the telephony mode is a function that conventional camera-equipped mobile phones have, and thus its detailed description is omitted here. Alternatively, this exemplary embodiment can adopt a configuration where an image is taken and the image data is sent to an appropriate destination when a predetermined number is entered without a switching function between the camera and telephony modes. In other words, the camera takes an image and sends image data to a destination corresponding to a relevant operation when a predetermined operation is executed.

Software which realizes the camera in this exemplary embodiment is the program described as below. Briefly speaking, this program executes step A to capture an image and obtain its image data; step B to obtain destination information stored previously in storage 1302 for specifying a destination; and step C to send the image data to the destination obtained in step B. More specifically, the program executes an operating information acquisition step of obtaining operating information; a step of determining whether or not the operating information matches a stored condition; a step of instructing image capture and obtaining image data when the condition is determined to be matched in the determination step; a step of obtaining a destination indicated in the destination information related to the matched condition; and a step of sending the captured image data.

### INDUSTRIAL APPLICABILITY

As described above, the camera of the present invention automatically sends captured image data in response to image capture. This camera is effectively applied to digital cameras and camera-equipped mobile phones.

## Claims

1. A camera having transmission function, the camera comprising:
an image data acquisition unit for capturing an image and acquiring data of the image;
a storage for storing destination information in advance, the destination information specifying a destination to send the data; and
a transmitter for sending the data to the destination indicated in the destination information stored in the storage.

2. The camera according to claim 1 further comprising a destination information receiver for accepting an entry of the destination information.

3. The camera according to claim 2 further comprising a destination information accumulation unit for accumulating the destination information accepted by destination information receiver in the storage.

4. The camera according to claim 1, wherein the transmitter sends the data to the destination immediately after capturing the image.

5. The camera according to claim 1, wherein the camera accepts an instruction for capturing an image after accepting an entry of the destination information; captures the image, and sends the data to the destination.

6. The camera according to claim 1, wherein the camera makes an inquiry whether or not to send the data before sending the data to the destination, and sends the data to the destination only after receiving an instruction for transmission in response to the inquiry.

7. The camera according to claim 1 further comprising
an operating information acquisition unit for acquiring operating information which is information on an image-capture operation; and
a determination unit for determining whether or not the operating information matches a transmission condition, the transmission condition being a condition for sending the data and also a condition on a capture operation;
wherein the storage stores the transmission condition and the destination information relatively, and the transmitter sends the data to a destination related to the matched transmission condition when the determination unit determines that the operating information matches.

8. The camera according to claim 7, wherein:
the transmission condition is one of a plurality of transmission conditions, the destination information is one of a plurality of pieces of destination information, and the plurality of pieces of destination information are respectively related to the plurality of transmission conditions;
the storage stores the plurality of transmission conditions and the plurality of pieces of destination information;
the determination unit determines whether or not the operating information matches at least one of the plurality of transmission conditions; and
the transmitter sends the data to a destination indicated in each piece of the destination information respectively related to at least one transmission condition which is determined to be matched by the determination unit.

9. The camera according to claim 7, wherein the transmission condition includes a condition on number of capture operations.

10. The camera according to claim 7, wherein the transmission condition is a condition on number of captures per unit time.

11. The camera according to claim 7 further comprising a capture button for accepting an instruction on image capture,
wherein the transmission condition is a condition on a pressing time of the capture button.

12. The camera according to claim 1 further comprising at least one capture button for accepting an instruction on image capture,
wherein the storage stores the destination information so that the destination information is related to the capture button respectively; and
the transmitter sends the data to a destination indicated in the destination information related to the capture button pressed when pressing of the capture button is accepted.

13. The camera according to claim 1 further comprising at least two capture buttons for accepting an instruction for image capture;
wherein the storage stores at least two pieces of operation information so that each piece of the operation information is related to the at least two capture buttons, the operation information being information on an operation when the at least two capture buttons are pressed; and
the camera further comprises an operation unit for executing the operation in accordance with the operation information related to one of the capture buttons which is pressed when pressing of one of the at least two capture buttons is accepted, and the operation executed by the operation unit includes transmission of captured image data.

14. The camera according to claim 13, wherein the operation information includes the destination information, and the operation executed by the operation unit includes transmission of the data to the destination.

15. The camera according to claim 13, wherein the operation executed by the operation unit further includes accumulation of the data.

16. The camera according to claim 15, wherein the operation information includes information on an accumulation destination which indicates where to accumulate the data, and the operation executed by the operation unit includes accumulation of the data in the accumulation destination.

17. The camera according to claim 1further comprising:
an operating information acquisition unit for acquiring operating information; and
a determination unit for determining whether or not the operating information matches a condition stored in the storage;
wherein the storage stores a condition for capturing the image and transmitting data of the image, and destination information indicating a destination to send the data; and
the transmitter sends the data to the destination indicated in the destination information related to a matched condition when the condition is determined to matched by the determination unit.

18. The camera according to claim 17 further comprising a plurality of operation buttons, wherein the operating information is a sequence of pressing the operation buttons.

19. The camera according to claim 1, wherein when a predetermined operation is executed, the image is captured, and the data is sent to a destination related to the predetermined operation.

20. A mobile phone comprising:
a microphone for accepting audio input;
a speaker for generating sound upon receiving a signal and;
an image data acquisition unit for capturing an image and acquiring data of the image;
a storage for storing destination information in advance, the destination information specifying a destination to send the data; and
a transmitter/receiver for sending a signal to the speaker upon accepting the signal from outside; sending a signal from the microphone by radio; and sending the data to the destination in accordance with the destination information.

21. The mobile phone according to claim 20 further comprising:
a mode switchover button for switching to a camera mode; and
a numeric keypad which acts as a capture button for accepting an image-capture instruction when the mode switchover button is pressed.

22. An image data acquiring/transmitting program comprising:
A) capturing an image and acquiring data of the image;
B) acquiring destination information specifying a destination, the destination information being stored in advance; and
C) sending the data to the destination acquired in the step B.

23. The program according to claim 22, wherein the step B includes:
D) accepting an entry of the destination information; and
E) accumulating the destination information accepted in the step D.

24. The program according to claim 22 further comprising:
F) acquiring operating information which is information on an image-capture operation; and
G) determining whether or not the operating information matches a stored transmission condition;
wherein the transmission condition is related to the destination information; and
the data is sent to a destination related to the transmission condition when the operating information is determined to match the stored transmission condition in the step G.

25. The program according to claim 22 further comprising:
H) accepting pressing of one of at least two capture buttons;
J) acquiring operation information related to the capture button whose pressing is accepted; and
K) executing an operation in accordance with the operation information acquired;
wherein the operation information is one of a plurality of pieces of operation information respectively related to the at least two capture buttons, and at least one of the plurality of pieces of operation information includes transmission of the data to the destination.

26. The program according to claim 22 further comprising:
L) acquiring operating information; and
M) determining whether or not the operating information matches a condition stored;
wherein the destination information and the condition are relatively stored; and
the step A is executed when the operating information is determined to match the condition in the step M, and the data is sent to the destination indicated in the destination information related to the matched condition.
